# EUROPÄISCHE PATENTSCHRIFT

(11) **EP 0 367 067 B1**
(45) Veröffentlichungstag und Bekanntmachung des Hinweises auf die Patenterteilung: **15.12.1993**
(21) Anmeldenummer: 89119690.9
(22) Anmeldetag: 24.10.1989
(51) Int. Cl.: C09B 57/12

(54) **Verfahren zur Herstellung von Küpenfarbstoffen und Pigmenten der Perinon-Reihe**
Process for the preparation of vat dyestuffs and pigments of the perinone series
Procédé de préparation de colorants de cuve et de pigments de la série des périnones

(30) Priorität: 28.10.1988 DE 3836674
(43) Veröffentlichungstag der Anmeldung: 09.05.1990
(73) Patentinhaber: HOECHST AKTIENGESELLSCHAFT, 65926 Frankfurt am Main (DE)
(72) Erfinder: Dietz, Erwin, Dr., D-6233 Kelkheim (Taunus) (DE); Kapaun, Gustav, Dr., D-6232 Bad Soden am Taunus (DE); Schiessler, Siegfried, Dr., D-6232 Bad Soden am Taunus (DE)

(56) Entgegenhaltungen:
- CH-A- 561 261
- DE-A- 1 569 736
- FR-A- 1 406 207

## Beschreibung

Bei den polycyclischen Farbmitteln aus der Perinon-Reihe handelt es sich chemisch um Erzeugnisse, die sich u.a. von Naphthalin-1,4,5,8-tetracarbonsäure als Grundkörper ableiten. Die auf dem Markt befindlichen Vertreter dieser Klasse werden in unterschiedlichen Handelsformen angeboten: Sie haben Bedeutung erlangt sowohl als Küpenfarbstoffe (C.I. Vat Dyes) für die Färbung von Textilien, zählen aber aufgrund ihrer physikalischen Eigenschaften auch zu den Pigmenten (C.I. Pigments), wobei sie für das zuletzt genannte Einsatzgebiet aus den Rohprodukten des Kondensationsprozesses erst durch chemische und/oder physikalische Nachbehandlungsoperationen (Formierung oder Finish) besonders aufbereitet werden müssen.

Der Aufbau des Perinon-Ringsystems erfolgt durch Reaktion von Naphthalin-1,4,5,8-tetracarbonsäure bzw. der Anhydride davon mit aromatischen o-Diaminen zu den Bis-imidazol-Verbindungen. Diese stellen ein cis/trans-Isomeren-Gemisch (gegebenenfalls in Form von Mischkristallen) dar, welches auf mehr oder weniger komplizierte Weise in die jeweiligen Komponenten mit unterschiedlicher räumlicher Atomanordnung aufgetrennt werden kann.

Die Kondensation von Naphthalin-1,4,5,8-tetracarbonsäure und/oder Naphthalin-1,4,5,8-tetracarbonsäure-1,8-monoanhydrid und/oder Naphthalin-1,4,5,8-tetracarbonsäure-1,8,4,5-dianhydrid mit 1,2-Diaminobenzol und/oder substituierten 1,2-Diaminobenzolen, vorzugsweise in Gegenwart eines Lösungs- bzw. Verdünnungsmittels, bei erhöhter Temperatur, ist schon lange bekannt und mehrfach beschrieben:

So wird die Umsetzung der Naphthalin-1,4,5,8-tetracarbonsäure bzw. eines deren Anhydride mit gegebenenfalls substituiertem 1,2-Diaminobenzol durchgeführt z.B. gemäß der DE-PS 430 632 durch Zusammenschmelzen der beiden Ausgangsstoffe in Abwesenheit von Verdünnungsmitteln oder durch Erhitzen in einem hochsiedenden Lösungsmittel wie Nitrobenzol;
entsprechend dem Fiat Final Report 1313 II, 168 in Eisessig bei 120°C;
laut der DE-AS 1 569 736 in einem niedrigsiedenden Alkohol, besonders Ethanol, unter Zusatz von Essigsäure bei Temperaturen zwischen 120° und 180°C unter Druck;
nach der DE-OS 32 35 572 bei vorzugsweise 130° bis 170°C in Phenol bzw. nach Rusanov u.a. in Khim. Geterotsikl. Seodin. 1979/7, 968-971 bei 160°bis 200°C in m-Kresol als organischem Verdünnungsmittel,
und zufolge der DE-OS 1 569 740 unter Sieden in verdünnter Schwefelsäure bzw. der SU-PS 182 823 in verdünnter Schwefelsäure im Beisein eines oberflächenaktiven Dispergierhilfsmittels bei 120° bis 150°C.
Nach den Angaben in der DE-PS 1 271 861 wird schließlich die Naphthalin-1,4,5,8-tetra-carbonsäure gleichzeitig mit einer Mischung aus 1,2-Diaminobenzol und 4-Ethoxy-1,2-diaminobenzol in einem inerten organischen Lösungsmittel wie Pyridin oder Eisessig bei Siedetemperatur sowie Atmosphärendruck oder im wäßrigen Medium unter erhöhtem Druck bei 130° bis 180°C kondensiert.

Alle diese bisher üblichen Verfahren für die Synthese von Perinon-Farbstoffen bzw. -Pigmenten befriedigen indessen nicht, da sie entweder den Einsatz von nichtwäßrigen Lösemitteln erforderlich machen oder bei Verwendung von Wasser als Lösemittel mit deutlichen Überschüssen an den aromatischen Diaminen (vgl. DP-PS 1 271 861, Beispiel 3) verrichtet werden müssen.

In manchen Fällen erfüllen auch die erzielbaren Ausbeuten heutzutage nicht mehr die Voraussetzungen an die Wirtschaftlichkeit solcher Herstellungspraktiken. So wird im Ausführungsbeispiel 1 der SU-PS 182 823 als Resultat für die Umsetzung der Naphthalin-1,4,5,8-tetracarbonsäure mit 1,2-Diaminobenzol (in verdünnter Schwefelsäure) wohl eine Ausbeute von 94 % d.Th. vorgegeben. Dieser Befund ist allerdings falsch, weil sich aufgrund der durch Zahlen belegten Menge an dem erhaltenen Küpenfarbstoff lediglich ein Ertrag entsprechend 83 % d.Th. errechnet.

Die zuvor genannten Verfahrenstechniken sind darüber hinaus zum Teil ökologisch bedenklich und weisen ökonomische Schwierigkeiten auf. Unter dem Gesichtspunkt der Abfallbeseitigung müssen mitverwendete Lösemittel im Anschluß an den Kondensationsvorgang regeneriert werden, wobei auch Abluftprobleme auftreten; gleichermaßen muß verdünnte Schwefelsäure in Blickrichtung auf einen erneuten Einsatz hinterher erst aufgearbeitet werden. Die Kondensation in Eisessig als begleitendes Lösemittel führt wiederum zu einem erheblichen Anteil an Naphthoylenbenzimidazol-peri-dicarbonsäureanhydrid 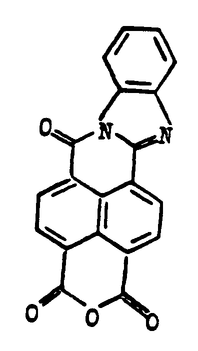
als Nebenprodukt; die Kondensation in Verdünnung durch Wasser gemäß DE-PS 1 271 861 hat den Nachteil, daß synthesebedingt überschüssige aromatische Diamine das Abwasser belasten.

Wird Naphthalin-1,4,5,8-tetracarbonsäure, Naphthalin-1,4,5,8-tetracarbonsäure-1,8-monoanhydrid oder Naphthalin-1,4,5,8-tetracarbonsäure-1,8,4,5-dianhydrid jeweils für sich allein oder werden diese Verbindungen auf obiger Basis gemeinsam als Mischung mit 1,2-Diaminobenzol kondensiert, so entsteht der Farbstoff C.I. Vat Red 14 (III) mit der C.I.-Nr. 71110, der ein Isomeren-Gemisch aus dem trans-Produkt C.I. Vat Orange 7 (I) mit der C.I.-Nr. 71105 (entspricht auch C.I. Pigment Orange 43) und dem cis Produkt C.I. Vat Red 15 (II) mit der C.I.-Nr. 71100 (entspricht auch C.I. Pigment Red 194) verkörpert: 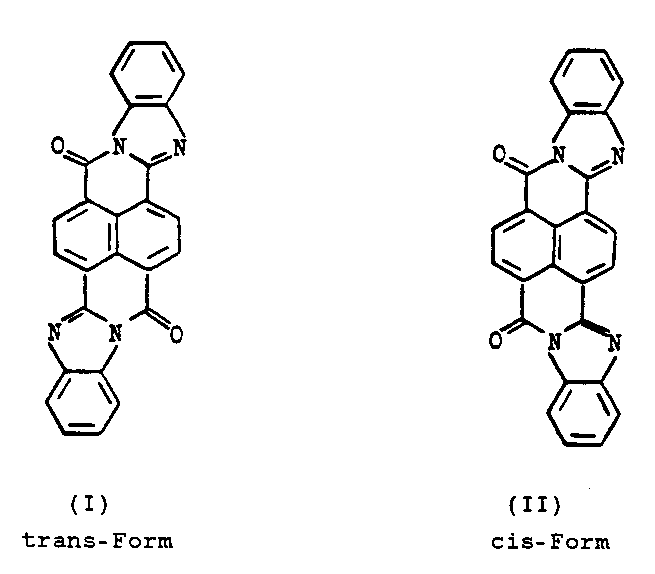
Bei diesen beiden isomeren Verbindungen handelt es sich im Falle von I (trans-Form) wegen des interessanten Farbtons (reines, rotstichiges Orange) um das coloristisch begehrtere Produkt.

In keiner Veröffentlichung wird indessen die Herstellung des Gemisches III in Richtung auf das interessantere Isomere I optimiert.

Für die nachstehend erörterte Erfindung, welche auf dem weiter oben beschriebenen Arbeitsgebiet fußt, stellten sich also folgende Aufgaben:
1) Von den konventionellen Praktiken her bekannte ökologische Mängel zu beseitigen,
2) demgegenüber wirtschaftlich vorteilhaftere Herstellungsmethoden für die ins Auge gefaßten Farbmittel zu entwickeln,
3) dabei eine maximale Gesamtausbeute zu erzielen, und
4) insbesondere im Rahmen der Kondensation von Naphthalin-1,4,5,8-tetracarbonsäure(derivaten) mit unsubstituiertem 1,2-Diaminobenzol die Bedingungen für den Herstellungsprozeß derart auszuwählen bzw. zu variieren, daß der größtmögliche Anteil an dem färberisch wertvollen trans-Isomeren I gewonnen wird.

Diese Aufgaben im Zuge der Erzeugung von Küpenfarbstoffen und Pigmenten der Perinon-Reihe, welche Gemische aus Naphthoylen-bis-benzimidazol-Isomeren der folgenden molekularen Struktur 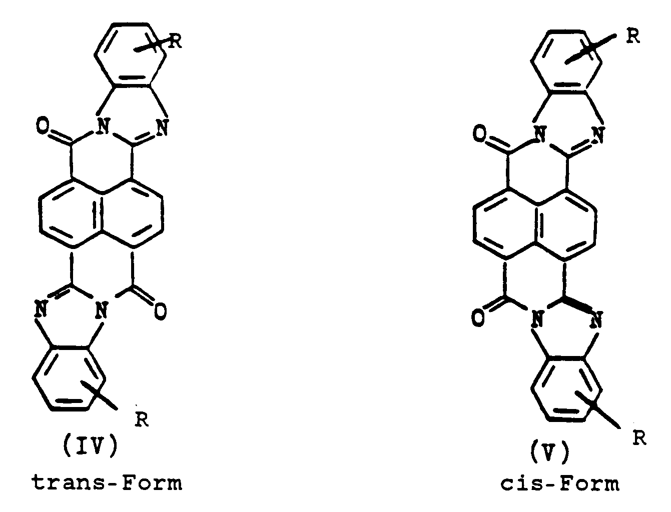
darstellen, worin R = Wasserstoff, C₁-C₄-Alkyl, C₁-C₄-Alkoxy, Chlor, Brom, Cyan, Carboxyl oder Trifluormethyl bedeutet und wobei im Falle von mehrfach substituierten Produkten die Bedeutung von R identisch oder verschieden sein kann, durch Kondensation von Naphthalin-1,4,5,8-tetracarbonsäure und/oder deren 1,8-Monoanhydrid und/oder deren 1,8,4,5-Dianhydrid in Gegenwart eines Lösungs- bzw. Verdünnungsmittels bei erhöhter Temperatur mit 1,2-Diaminobenzol und/oder einem substituierten 1,2-Diaminobenzol und/oder von Salzen dieser aromatischen Diamine, welche in salzfreiem Zustand der nachstehenden Formel 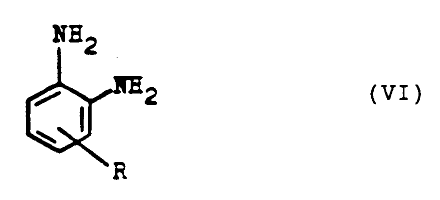
entsprechen und worin R die oben definierte Bedeutung besitzt, werden erfindungsgemäß gelöst, indem man die Reaktionspartner unter saurer Katalyse durch Erhitzen in wäßrigem Medium, gegebenenfalls bei erhöhtem Druck, zunächst im Temperaturbereich von 60° bis 110°C, vorzugsweise bei 80° bis 100°C, vorkondensiert und anschließend dann im Temperaturbereich von 130° bis 180°C, vorzugsweise bei 150° bis 170°C, die Umsetzung vollendet.

Zweckmäßig wird die erfindungsgemäße Vorkondensation im Verlauf von 1/2 bis 4 Stunde(n) vorgenommen und die Umsetzung (Hauptkondensation) dann während 2 bis 6 Stunden zum Abschluß gebracht.

Als saure Katalysatoren werden nach der Erfindung bevorzugt biologisch abbaubare Säuren wie beispielsweise aliphatische Carbonsäuren, vor allem Essigsäure und auch Ameisensäure herangezogen. Die einzusetzende Säuremenge kann hierbei innerhalb eines weiten Bereiches schwanken, sollte jedoch nicht über 25 % (bezogen auf das Gewicht des Reaktionsmediums), vorzugsweise unter 12 %, insbesondere zwischen 6 und 10 % liegen.

Naphthalin-1,4,5,8-tetracarbonsäure, ihr 1,8-Monoahydrid und/oder ihr 1,8,4,5-Dianhydrid werden mit den formelmäßig definierten aromatischen Diaminen vorzugsweise in stöchiometrischem Verhältnis von 1:2 bis 1:2,04 eingesetzt.

Als Bilanz bei der Durchführung des beanspruchten Verfahrens wurde überraschenderweise gefunden, daß die Ausbeute der Kondensation praktisch quantitativ ist, ohne daß ein Überschuß an den aromatischen Diaminen eingesetzt zu werden braucht. Unerwartet hat sich darüber hinaus in diesem Zusammenhang auch herausgestellt, daß bei der Umsetzung von Naphthalin-1,4,5,8-tetracarbonsäure(derivaten) mit dem unsubstituierten 1,2-Diaminobenzol das erfindungsgemäß gebildete Isomerengemisch III aus 63 % trans-Produkt (I), dem begehrteren Produkt, und 37 % cis-Produkt (II) besteht. Wird in einem solchen Fall nach den Methoden gemäß Stand der Technik gearbeitet, so erhält man in Eisessig hingegen ein Isomerenverhältnis von 57 % zu 43 % und in Ethanol oder Nitrobenzol eines von 59 % zu 41 %.

Die verfahrensgemäße Arbeitsweise in Wasser bietet zudem weitere Vorteile: Es entstehen dabei keine Abluftprobleme, mitverwendete organische Lösemittel müssen hinterher nicht regeneriert werden und benutzte verdünnte Schwefelsäure muß nicht erst gereinigt und dann aufkonzentriert werden, ehe man sie erneut einsetzen kann.

Bei dieser Sachlage erweist sich das erfindungsgemäße Herstellungprinzip für die Verbindungen der Perinon-Reihe nicht nur ökologisch, sondern auch ökonomisch als die zur Zeit günstigste Verfahrensweise.

In den nachfolgenden Beispielen bedeuten die Teile Gewichtsteile, die Prozente Gewichtsprozente. Der Gehalt an den Isomeren I und II wurde photometrisch bestimmt.

### Beispiel 1a

144,5 Teile Naphthalin-1,4,5,8-tetracarbonsäure-1,8-monoanhydrid von 99 %iger Reinheit (gereinigt nach dem in der EP-PS 0 134 972 erläuterten Verfahren), 112 Teile 1,2-Diaminobenzol und 140 Teile Eisessig (als saurer Katalysator) werden im Autoklav sowie bei Raumtemperatur während 1 Stunde in 1800 Teilen Wasser (als Lösemittel) verrührt, wobei die im Behandlungsgefäß anwesende Luft mittels Stickstoff verdrängt wird. Nun erwärmt man den Ansatz der Ausgangsstoffe auf 60°C und erhöht anschließend die Temperatur nur noch so langsam, daß dieselbe im Verlauf von 4 Stunden im gleichmäßigen Tempo von 60° auf 110°C ansteigt. Bei der in diesem Temperaturbereich eintretenden Vorkondensation wird das hochviskose Reaktionsgemisch weiter intensiv gerührt. Hernach bringt man durch zügiges Erhitzen die Behandlungstemperatur auf 150 - 160°C und rührt unter solchen Bedingungen noch 6 Stunden nach, wobei das Reaktionsgemisch wieder dünnflüssig wird und die Umsetzung zu Ende geht. Daraufhin läßt man den flüssigen Autoklaveninhalt erkalten, saugt das dabei ausgeschiedene Kondensationsprodukt ab, wäscht dasselbe mit heißem Wasser und trocknet es bei 100°C.
Ausbeute: 202,6 Teile (98 % d.Th.) des Farbstoffes C.I. Vat Red 14 mit der C.I.-Nr. 71110 (III).

Das so erhaltene Produkt stellt ein Isomerengemisch (III) dar und setzt sich zusammen aus
63 % des Farbstoffes C.I. Vat Orange 7 mit der C.I.-Nr. 71105 / trans-Isomeres (I) und
37 % des Farbstoffes C.I. Vat Red 15 mit der C.I.-Nr. 71100 / cis-Isomeres (II).

Kondensiert man die genannten Reaktionspartner in nicht-wäßrigen, organischen Lösemitteln, so erzielt man folgende Zusammensetzungen des Isomerengemisches

| Lösemittel | Struktur | |
|---|---|---|
| | I | II |
| Eisessig | 57 % | 43 % |
| Ethanol | 59 % | 41 % |
| Nitrobenzol | 59 % | 41 % |

### Beispiel 1b

Verfährt man bei der Durchführung der Umsetzung wie im Beispiel 1a, verzichtet aber in diesem Fall auf die dort erfolgte Vorkondensation bei 60 - 110°C, sondern heizt die Ausgangsstoffe im Anschluß an deren Vermischung direkt sowie rasch auf die Temperatur von 160°C, dann wird als Ergebnis der abgeänderten Kondensationsbedingungen wohl ebenfalls der Farbstoff C.I. Vat Red 14 (C.I.-Nr. 71110) gewonnen, welcher als Reinprodukt eine Isomerenmischung bestehend aus hier jedoch nur 59 % des Farbstoffes C.I. Vat Orange 7 (C.I.-Nr. 71105) sowie 41 % des Farbstoffes C.I. Vat Red 15 (C.I.-Nr. 71100) enthält, und der in erheblichem Ausmaß als Nebenprodukt Naphthoylenbenzimidazol-peridicarbonsäureanhydrid aufweist.

### Beispiel 2

71,5 Teile Naphthalin-1,4,5,8-tetracarbonsäure-1,8-monoanhydrid, 76 Teile 4-Ethoxy-1,2-diaminobenzol und 70 Teile Eisessig werden im Autoklav unter Überlagerung mit Stickstoff in 800 Teilen Wasser verrührt. Dann erhitzt man den Ansatz zunächst 4 Stunden auf 90 - 100°C und daraufhin 6 Stunden auf 160°C. Nach beendigter Kondensation läßt man das Reaktionsgemisch erkalten, saugt das ausgefallene Umsetzungprodukt ab, wäscht dasselbe mit heißem Wasser neutral und trocknet es.

Man erhält als Ausbeute 124,2 Teile (99 % d.Th.) des Farbstoffes C.I. Vat Brown 14 mit der C.I.-Nr. 71120 (als Isomerengemisch).

### Beispiel 3

87,6 Teile 4-Ethoxy-1,2-diaminobenzol, stabilisiert als schwefelsaures Salz sowie in feuchtem Zustand, das 29,5 % 4-Ethoxy-1,2-diaminobenzol als reine Base enthält, werden in 620 Teile Wasser eingebracht und durch Zugabe von etwa 40 Teilen 30 %iger Natronlauge auf pH = 6,8 eingestellt. Diese Vorlage beschickt man nun nacheinander mit noch 180 Teilen Wasser sowie 35,7 Teilen 1,2-Diaminobenzol und stellt den Ansatz mittels etwa 70 Teilen Eisessig auf pH = 4,2 ein. Alsdann werden der Mischung aus den beiden verschiedenen Diaminen 71,5 Teile Naphthalin-1,4,5,8-tetracarbonsäure-1,8-monoanhydrid hinzugesetzt, derweil das Reaktionsgemisch bei Raumtemperatur kräftig durchgerührt wird und worauf man dasselbe zur Einleitung der Kondensation 4 Stunden lang zunächst auf 90° - 100°C erhitzt. Anschließend wird die Umsetzung durch weiteres Erhitzen unter Druck für nochmals 6 Stunden auf 160°C vervollständigt. Sodann läßt man erkalten, filtriert das entstandene Kondensationsprodukt ab, wäscht den Filterkuchen neutral und trocknet.
Ausbeute: 109 Teile (98 % d.Th.) eines rotbraunen Küpenfarbstoffes.

### Beispiel 4

71,5 Teile Naphthalin-1,4,5,8-tetracarbonsäure-1,8-monoanhydrid, 61,6 Teile 4-Methyl-1,2-diaminobenzol und 70 Teile Eisessig werden im Autoklav unter Stickstoff in 900 Teilen Wasser verrührt. Dann erhitzt man die vermischten Reaktionspartner während 4 Stunden zunächst auf 90 - 100°C und dann für weitere 6 Stunden auf 160°C. Nun läßt man den Ansatz erkalten, saugt das Reaktionsprodukt ab, wäscht es mit heißem Wasser neutral und trocknet.

Man erhält 109 Teile (99 % d.Th.) eines roten Küpenfarbstoffes.

## Patentansprüche

1. Verfahren zur Herstellung von Küpenfarbstoffen und Pigmenten der Perinon-Reihe, welche Gemische aus Naphthoylen-bis-benzimidazol-Isomeren der folgenden molekularen Struktur 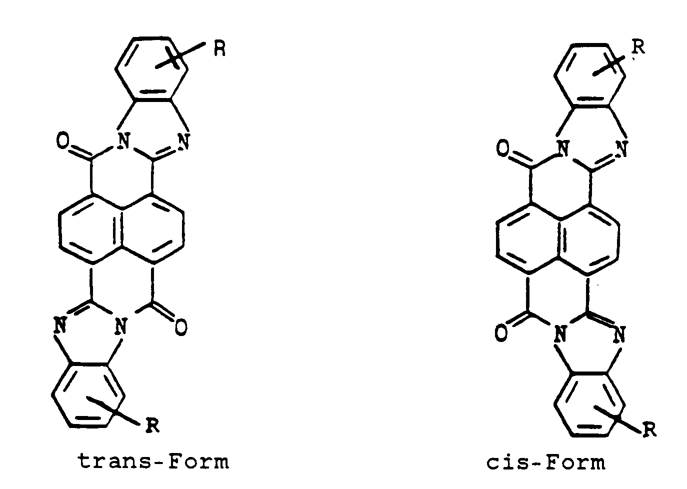 darstellen, worin R = Wasserstoff, C₁-C₄-Alkyl, C₁-C₄-Alkoxy, Chlor, Brom, Cyan, Carboxyl oder Trifluormethyl bedeutet und wobei im Falle von mehrfach substituierten Produkten die Bedeutung von R identisch oder verschieden sein kann, durch Kondensation von Naphthalin-1,4,5,8-tetracarbonsäure und/oder deren 1,8-Monoanhydrid und/oder deren 1,8,4,5-Dianhydrid in Gegenwart eines Lösungs- bzw. Verdünnungsmittels bei erhöhter Temperatur mit 1,2-Diaminobenzol und/oder einem substituierten 1,2-Diaminobenzol und/oder von Salzen dieser aromatischen Diamine, welche in salzfreiem Zustand der nachstehenden Formel 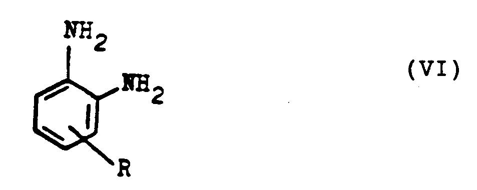 entsprechen und worin R die oben definierte Bedeutung besitzt, dadurch gekennzeichnet, daß man die Reaktionspartner unter saurer Katalyse durch Erhitzen in wäßrigem Medium, zunächst im Temperaturbereich von 60° bis 110°C vorkondensiert und anschließend dann im Temperaturbereich von 130° bis 180°C die Umsetzung vollendet.

2. Verfahren nach Anspruch 1, dadurch gekennzeichnet, daß man die Reaktionspartner zunächst im Temperaturbereich von 80° bis 100°C vorkondensiert und dann im Temperaturbereich von 150° bis 170°C die Umsetzung vollendet.

3. Verfahren nach Anspruch 1 oder 2, dadurch gekennzeichnet, daß man die Vorkondensation im Verlauf von 1/2 bis 4 Stunde(n) vornimmt und die Umsetzung (Hauptkondensation) dann während 2 bis 6 Stunden zum Abschluß bringt.

4. Verfahren nach mindestens einem der Ansprüche 1 bis 3, dadurch gekennzeichnet, daß man als sauren Katalysator eine aliphatische Carbonsäure verwendet.

5. Verfahren nach Anspruch 4, dadurch gekennzeichnet, daß man als Katalysator Essigsäure einsetzt.

6. Verfahren nach mindestens einem der Ansprüche 1 bis 5, dadurch gekennzeichnet, daß man als aromatisches Diamin 4-Ethoxy-1,2-diaminobenzol verwendet.

7. Verfahren nach mindestens einem der Ansprüche 1 bis 6, dadurch gekennzeichnet, daß man Naphthalin-1,4,5,8-tetracarbonsäure und/oder deren Anhydride mit den formelmäßig definierten aromatischen Diaminen im Molverhältnis von 1:2 bis 1:2,04 umsetzt.

## Claims

1. A process for preparing vat dyes and pigments of the perinone series comprising mixtures of naphthoylenebis-benzimidazole isomers of the following molecular structures: 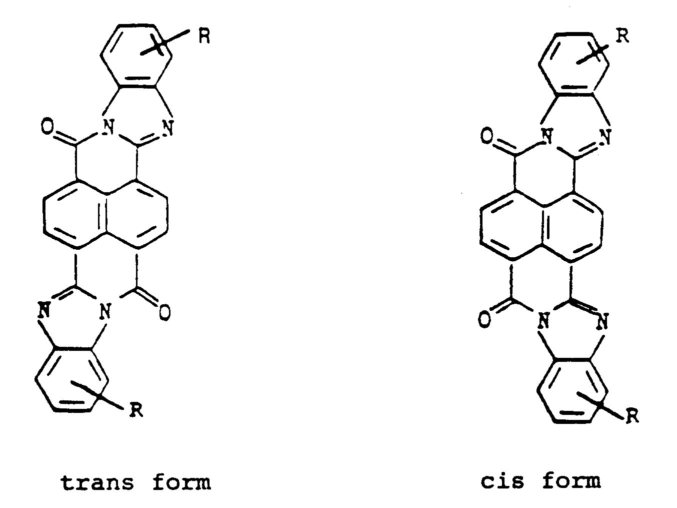 where R is hydrogen, C₁-C₄-alkyl,C₁-C₄-alkoxy,chlorine, bromine, cyano, carboxyl or trifluoromethyl and where in the case of polysubstituted products each R may be identical to or different from the other one, by condensation of naphthalene-1,4,5,8-tetracarboxylic acid and/or 1,8-monoanhydride and/or 1,8,4,5-dianhydride in the presence of a solvent or diluent at elevated temperature with 1,2-diaminobenzene and/or a substituted 1,2-diaminobenzene and/or salts of these aromatic diamines which in the salt-free state conform to the following formula: 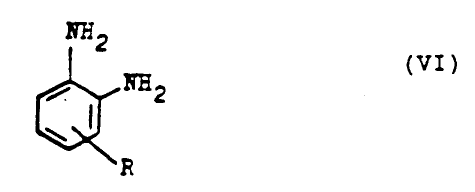 where R is as defined above, which comprises initially precondensing the reactants under acid catalysis by heating in an aqueous medium within the temperature range from 60° to 110°C and then completing the reaction within the temperature range from 130° to 180°C.

2. The process as claimed in claim 1, wherein initially the reactants are precondensed within the temperature range from 80 to 100°C and the reaction is then completed within the temperature range from 150 to 170°C.

3. The process as claimed in claim 1 or 2, wherein the precondensation is carried out over ½ an hour to 4 hours and the reaction (main condensation) is then completed in the course of 2 to 6 hours.

4. The process as claimed in at least one of claims 1 to 3, wherein the acid catalyst used is an aliphatic carboxylic acid.

5. The process as claimed in claim 4, wherein the catalyst used is acetic acid.

6. The process as claimed in at least one of claims 1 to 5, wherein the aromatic diamine used is 4-ethoxy-1,2-diaminobenzene.

7. The process as claimed in at least one of claims 1 to 6, wherein naphthalene-1,4,5,8-tetracarboxylic acid and/or anhydrides thereof is or are reacted with the aromatic diamines of the defined formula in a molar ratio of 1:2 to 1:2.04.

## Revendications

1. Procédé de préparation de colorants de cuve et de pigments de la série des périnones, qui constituent des mélanges de naphtoylène-bis-benzimidazoles isomères de structures moléculaires suivantes : 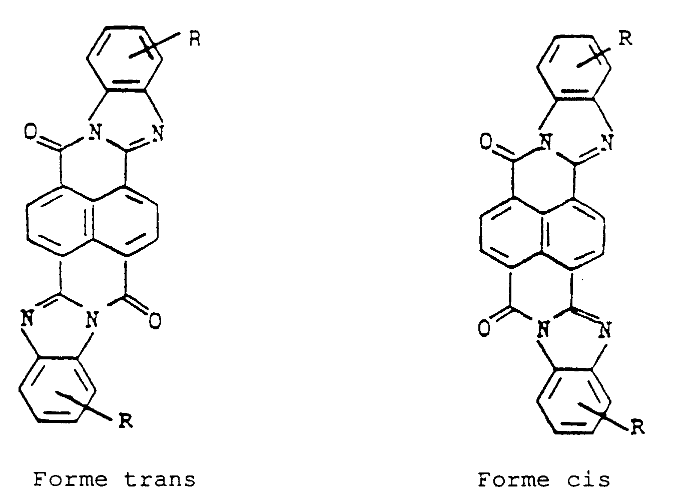 dans lesquelles R représente l'hydrogène, un alkyle ou un alcoxy en C₁-C₄, le chlore, le brome ou un groupe cyano, carboxyle ou trifluorométhyle, et dans le cas de produits polysubstitués les substituants R pouvant être identiques ou différents les uns les autres, par condensation de l'acide naphtalène-1,4,5,8-tétracarboxylique et/ou de son 1,8-monoanhydride et/ou de son 1,8,4,5-dianhydride, à chaud et en présence d'un solvant ou d'un diluant, avec le 1,2-diaminobenzène et/ou un dérivé de substitution de celui-ci et/ou des sels de ces diamines aromatiques qui, à l'état non salifié, ont la formule suivante : 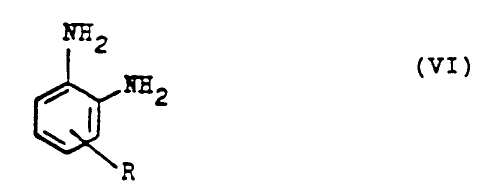 R ayant la signification ci-dessus, procédé caractérisé en ce que l'on soumet d'abord les partenaires réactionnels à une précondensation en catalyse acide par chauffage dans un milieu aqueux à une température de 60 à 110°C, puis on complète la réaction dans un intervalle de températures de 130 à 180°C.

2. Procédé selon la revendication 1, caractérisé en ce que l'on effectue la précondensation entre 80 et 100°C puis on achève la réaction entre 150 et 170°C.

3. Procédé selon la revendication 1 ou 2, caractérisé en ce que l'on effectue la précondensation en une durée d'une demi-heure à 4 heures et on conduit la réaction à son terme en 2 à 6 heures.

4. Procédé selon une ou plusieurs des revendications 1 à 3, caractérisé en ce que l'on utilise comme catalyseur acide un acide carboxylique aliphatique.

5. Procédé selon la revendication 4, caractérisé en ce que le catalyseur est de l'acide acétique.

6. Procédé selon une ou plusieurs des revendications 1 à 5, caractérisé en ce que la diamine aromatique est le 4-éthoxy-1,2-diaminobenzène.

7. Procédé selon une ou plusieurs des revendications 1 à 6, caractérisé en ce que l'on fait réagir l'acide naphtalène-1,4,5,8-tétracarboxylique et/ou ses anhydrides avec les diamines aromatiques dans un rapport molaire compris entre 1:2 et 1:2,04.
